# EUROPEAN PATENT SPECIFICATION

(11) **EP 3 319 208 B1**
(45) Date of publication and mention of the grant of the patent: **24.02.2021**
(21) Application number: 16196999.3
(22) Date of filing: 03.11.2016
(51) Int. Cl.: H02K 1/14, H02K 3/487

(54) **A STATOR FOR AN ELECTRICAL MACHINE**
STATOR FÜR EINE ELEKTRISCHE MASCHINE
STATOR POUR MACHINE ÉLECTRIQUE

(43) Date of publication of application: 09.05.2018
(73) Proprietor: ABB Schweiz AG, 5400 Baden (CH)
(72) Inventor: ISLAM, Jahirul, 724 71 Västerås (SE); RAJABI MOGHADDAM, Reza, 724 78 Västerås (SE)
(74) Representative: Kransell & Wennborg KB

(56) References cited:
- EP-B1- 2 757 662
- DE-A1- 10 236 941
- DE-A1-102010 036 926
- JP-A- 2002 305 851
- US-A1- 2006 028 087
- US-A1- 2011 101 818

## Description

### TECHNICAL FIELD

The present invention relates to stators for electrical machines, and particularly to stators wherein at least some stator teeth are non-integral stator teeth i.e. at least partially non-integral in relation to a stator yoke.

### BACKGROUND ART

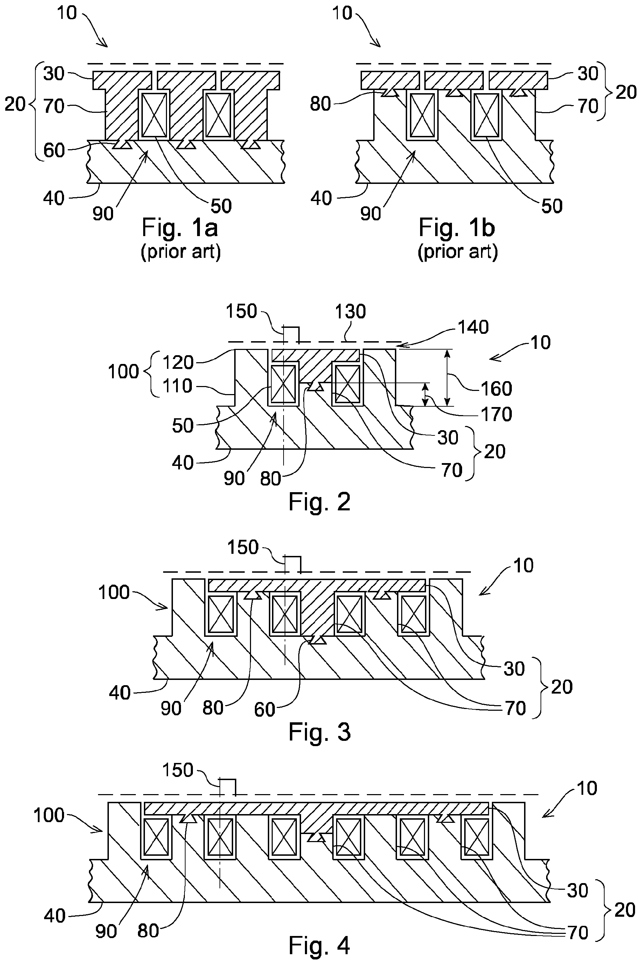

Referring to figures 1a and 1b, it is conventionally known to provide stators 10 where either stator teeth 20 in whole or at least tooth tips 30 of the same are discrete parts in relation to a stator yoke 40. This is done at least in part in order to facilitate or enable assembly of a stator 10 where a winding 50 lies within each stator slot 90 formed in between each pair of neighbouring stator teeth 20, and where a distance between each pair of neighbouring tooth tips 30 is smaller than the width of the winding 50.

According to DE102010030877A1 (figure 1a) all the stator teeth 20 are in whole non-integral in relation to a stator yoke 40, and fixedly attached to the same by their feet 60. According to EP2757662B1 (figure 1b) the tooth tips 30 of all the stator teeth 20 are non-integral in relation to the stator yoke 40, and fixedly attached to respective tooth bodies 70 by means of dovetail joints 80 or similar interlocking joints. In the present disclosure both the stator teeth 20 of the type of figure 1a and of the type of figure 1b are termed as "non-integral stator teeth" as at least the tooth tips 30 are non-integral in relation to the stator yoke 40. The tooth tips 30 of non-integral stator teeth 20 are termed as "non-integral tooth tips", and the tooth bodies 70 of non-integral stator teeth 20 are termed as "non-integral tooth bodies".

Stators 10 with non-integral stator teeth 20 according to the aforementioned prior art comprise a large number of discrete parts. There is a desire to achieve the same advantages as the prior art solutions with a decreased number of discrete parts.

US20110101818A1 discloses a stator with common tooth tips for several stator teeth. DE10236941A1 discloses a stator with every other stator tooth having a removable tooth tip. US20060028087A1 discloses a stator with every other stator tooth being removable. There is a desire to further improve the stators of the prior art.

### SUMMARY OF THE INVENTION

One object of the invention is to provide an improved stator for an electrical machine. A further object of the invention is to provide a stator having at least substantially covered stator slots with a decreased number of discrete parts. A yet further object of the invention is to provide an improved electrical machine.

These objects are achieved by the device according to appended claim 1.

The invention is based on the realization that a single non-integral tooth tip can be configured to at least substantially cover four or more stator slots, and consequently coverage of all the stator slots can be achieved with a small number of discrete parts in comparison to prior art solutions.

According to a first aspect of the invention, there is provided a stator for an electrical machine. The stator comprises a plurality of stator teeth, each stator tooth comprising a tooth body extending from a stator yoke. At least one of the plurality of stator teeth is a non-integral stator tooth with at least a non-integral tooth tip being non-integral in relation to the stator yoke. Each non-integral tooth tip is configured to lie between at least one non-integral tooth body and a rotor. Each non-integral tooth tip consists of a homogeneous piece of material, and is fixedly attached to at least one non-integral tooth body either in an integral or non-integral manner. The stator further comprises a stator slot between each pair of neighbouring tooth bodies, each stator slot being configured to receive at least one winding. Each non-integral tooth tip crosses a longitudinal central plane of at least four stator slots, and covers thereby more than 50 % of the respective at least four stator slots observed from a direction perpendicular to the air gap.

According to one embodiment of the invention, each non-integral tooth tip crosses the longitudinal central planes of at least six stator slots.

According to one embodiment of the invention, each non-integral tooth tip covers at least 60 % of the respective stator slots, such as at least 70 %, at least 80 %, at least 90 % or 100 % of the respective stator slots observed from a direction perpendicular to the air gap.

According to the invention, the plurality of stator teeth comprises at least one integral stator tooth with both an integral tooth body and an integral tooth tip being integral with the stator yoke.

According to one embodiment of the invention, the at least one integral stator tooth has a first height, a non-integral tooth body of at least one non-integral stator tooth has a second height, the second height being at least 25 % of the first height, such as at least 50 %, at least 60 %, at least 70 %, at least 80 % or at least 90 % of the first height.

According to one embodiment of the invention, at least every sixth stator tooth, such as at least every fourth stator tooth, is an integral stator tooth, and each remaining stator tooth is a non-integral stator tooth.

According to one embodiment of the invention, each non-integral tooth tip covers the whole of the respective non-integral tooth body or non-integral tooth bodies observed from a direction perpendicular to the air gap.

According to a second aspect of the invention, there is provided an electrical machine comprising a stator according to any of the preceding embodiments.

According to one embodiment of the invention, the electrical machine is a synchronous machine, such as a synchronous motor or a synchronous generator.

According to one embodiment of the invention, the electrical machine is a rotating machine.

### BRIEF DESCRIPTION OF THE DRAWINGS

The invention will be explained in greater detail with reference to the accompanying drawings, wherein
- figure 1a: shows a stator according to one prior art embodiment,
- figure 1b: shows a stator according to one prior art embodiment,
- figure 2: shows a stator according to an example,
- figure 3: shows a stator according to one embodiment of the invention,
- figure 4: shows a stator according to one embodiment of the invention, and
- figure 5: shows a stator according to an example.

### DESCRIPTION OF PREFERRED EMBODIMENTS

Referring to figure 2, a stator 10 according to an example comprises a plurality of stator teeth 20, 100. Each stator tooth 20, 100 comprises a tooth body 70, 110 extending from a stator yoke 40. Every second stator tooth is a non-integral stator tooth 20 with a non-integral tooth tip 30 that is non-integral in relation to the stator yoke 40. In the context of the present disclosure the term "integral" is to be construed to mean that there is no boundary with a discontinuity between the elements that are described to be integral with each other, the term typically referring to elements made in one piece. The term "non-integral" is to be construed to mean the opposite of "integral".

In addition to the non-integral stator teeth 20 the stator 10 further comprises integral stator teeth 100 with an integral tooth body 110 and an integral tooth tip 120 that both are integral in relation to the stator yoke 40. Each tooth tip 30, 120 is configured to lie between at least one tooth body 70, 110 and a rotor 130. In a complete electrical machine comprising a rotor 130 each tooth tip 30, 120 is separated from the rotor 130 by an air gap 140. Each tooth tip 30, 120 thereby covers the whole of the respective tooth body 70, 110 observed from a direction perpendicular to the air gap 140 i.e. from this direction only tooth tips 30, 120 and no tooth bodies 70, 110 are visible. The term "rotor" shall be construed to include both a rotor of a rotating machine and a corresponding mover of a non-rotating machine, such as of a linear machine.

The stator yoke 40 as well as the non-integral and integral stator teeth 20, 100 consist of a plurality of silicon steel sheets stacked together in a longitudinal direction, i.e. in a direction perpendicular to the drawing plane of figure 2, to form a stator 10 of an appropriate length. Similarly, each non-integral tooth tip 30 consists of a plurality of silicon steel sheets in homogeneous material stacked together in the longitudinal direction, and is fixedly attached to one non-integral tooth body 70 by means of a dovetail joint 80. For the purpose of defining the scope of protection of the appended patent claims each such sheet forming a part of a stator yoke 40, of a stator tooth 20, 100 or of a tooth tip 30, 120 shall be construed, as such, to be a stator yoke 40, a stator tooth 20, 100 or a tooth tip 30, 120, respectively.

The stator 10 further comprises a stator slot 90 between each pair of neighbouring tooth bodies (70, 110), each stator slot 90 being configured to receive at least one winding 50. Each stator slot 90 has a central plane 150 in the longitudinal direction. The central planes 150 are perpendicular to the air gap 140, and they divide each stator slot 90 in two equally large volumes. Each non-integral tooth tip 30 crosses the central planes 150 of two stator slots 90, and covers thereby more than 50 % of the respective stator slots 90 observed from a direction perpendicular to the air gap 140, in the following referred to as "radial direction". Preferably, each non-integral tooth tip 30 covers at least 60 % of the respective stator slots 90, such as at least 70 %, at least 80 %, at least 90 % or 100 % of the respective stator slots 90 observed from the radial direction.

The integral stator teeth 100 have a first height 160 which is equal to the heights of the non-integral stator teeth 20. The non-integral tooth bodies 70 have a second height 170. The second height 170 is preferably at least 50 % of the first height 160, such as at least 60 %, at least 70 %, at least 80 % or at least 90 % of the first height 160.

Referring to figure 3, in a stator 10 according to one embodiment of the invention every fourth stator tooth is an integral stator tooth 100, and each of the three stator teeth between the integral stator teeth 100 is a non-integral stator tooth 20. The three non-integral stator teeth 20 have a common non-integral tooth tip 30 that crosses the central planes 150 of four stator slots 90, and covers two of them to 100 %, and the remaining two to almost 100 %, observed from the radial direction. The non-integral tooth tip 30 is integral in relation to the non-integral tooth body 70 of the middlemost non-integral stator tooth 20, and non-integral in relation to the non-integral tooth bodies 70 of the two remaining non-integral stator teeth 20, to which the non-integral tooth tip 30 is fixedly attached by means of dovetail joints 80. The middlemost non-integral stator tooth 20 is fixedly attached to the stator yoke 40 by its foot 60.

Referring to figure 4, in a stator 10 according to one embodiment of the invention every sixth stator tooth is an integral stator tooth 100, and each of the five stator teeth between the integral stator teeth 100 is a non-integral stator tooth 20. The five non-integral stator teeth 20 have a common non-integral tooth tip 30 that crosses the central planes 150 of six stator slots 90, and covers four of them to 100 %, and the remaining two to almost 100 %, observed from the radial direction. The non-integral tooth tip 30 is non-integral in relation to the non-integral tooth bodies 70 of the five non-integral stator teeth 20. The non-integral tooth tip 30 is fixedly attached to three of them by means of dovetail joints 80, and to the remaining two the non-integral tooth tip 30 is not fixedly attached at all.

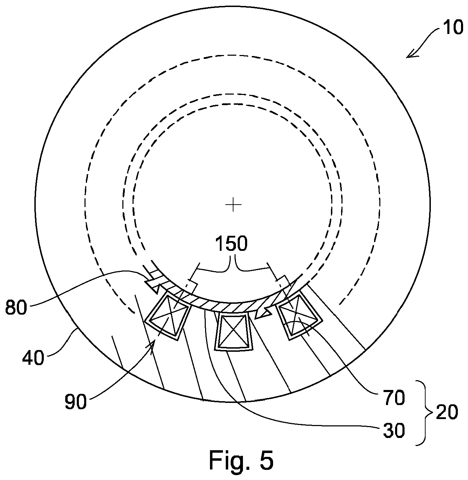

Referring to figure 5, in a stator 10 according to an example all the stator teeth are non-integral stator teeth 20. The non-integral stator teeth 20 have a common non-integral tooth tip 30 that crosses the central planes 150 of all stator slots 90, and covers all of them to 100 % observed from the radial direction. The non-integral tooth tip 30 is non-integral in relation to the non-integral tooth bodies 70 of the non-integral stator teeth 20. The non-integral tooth tip 30 is fixedly attached to every second of them by means of dovetail joints 80, and to the remaining ones the non-integral tooth tip 30 is not fixedly attached at all.

The invention is not limited to the embodiments shown above, but the person skilled in the art may modify them in a plurality of ways within the scope of the invention as defined by the claims.

## Claims

1. A stator (10) for an electrical machine, the stator (10) comprising:
a plurality of stator teeth (20, 100), each stator tooth (20, 100) comprising a tooth body (70, 110) extending from a stator yoke (40),
- at least one of the stator teeth (20, 100) being a non-integral stator tooth (20) with at least a non-integral tooth tip (30) being non-integral in relation to the stator yoke (40), each non-integral tooth tip (30) being configured to lie between at least one non-integral tooth body (70) and a rotor (130), each non-integral tooth tip (30) consisting of a homogeneous piece of material, and each non-integral tooth tip (30) being fixedly attached to at least one non-integral tooth body (70) either in an integral or non-integral manner,
- at least one of the stator teeth (20, 100) being an integral stator tooth (100) with both an integral tooth body (110) and an integral tooth tip (120) being integral with the stator yoke (40), and
a stator slot (90) between each pair of neighbouring tooth bodies (70, 110), each stator slot (90) being configured to receive at least one winding (50),
**characterized in that** each non-integral tooth tip (30) crosses the longitudinal central planes (150) of at least four stator slots (90), and covers thereby more than 50 % of the respective at least four stator slots (90) observed from a direction perpendicular to the air gap (140).

2. A stator (10) according to claim 1, wherein each non-integral tooth tip (30) crosses the longitudinal central planes (150) of at least six stator slots (90).

3. A stator (10) according to any of the preceding claims, wherein each non-integral tooth tip (30) covers at least 70 % of the respective stator slots (90), such as at least 80 %, at least 90 % or 100 % of the respective stator slots (90) observed from a direction perpendicular to the air gap (140).

4. A stator (10) according to any of the preceding claims, wherein the at least one integral stator tooth (100) has a first height (160), a non-integral tooth body (70) of at least one non-integral stator tooth (20) has a second height (170), the second height (170) being at least 25 % of the first height (160), such as at least 50 %, at least 60 %, at least 70 %, at least 80 % or at least 90 % of the first height (160).

5. A stator (10) according to any of the preceding claims, wherein at least every sixth stator tooth, such as at least every fourth stator tooth, is an integral stator tooth (100), and each remaining stator tooth is a non-integral stator tooth (20) .

6. A stator (10) according to any of the preceding claims, wherein each non-integral tooth tip (30) covers the whole of the respective non-integral tooth body (70) or non-integral tooth bodies (70) observed from a direction perpendicular to the air gap (140).

7. An electrical machine comprising a stator according to any of the preceding claims.

8. An electrical machine according to claim 7, wherein the electrical machine is a synchronous machine, such as a synchronous motor or a synchronous generator.

9. An electrical machine according to claim 7 or 8, wherein the electrical machine is a rotating machine.

## Patentansprüche

1. Stator (10) für eine elektrische Maschine, wobei der Stator (10) Folgendes umfasst:
mehrere Statorzähne (20, 100), wobei jeder Statorzahn (20, 100) einen Zahnkörper (70, 110) umfasst, der sich von einem Statorjoch (40) erstreckt,
- wobei mindestens einer der Statorzähne (20, 100) ein nicht integrierter Statorzahn (20) ist, wobei mindestens eine nicht integrierte Zahnspitze (30) in Bezug zum Statorjoch (40) nicht integriert ist, wobei jede nicht integrierte Zahnspitze (30) dazu ausgelegt ist, zwischen mindestens einem nicht integrierten Zahnkörper (70) und einem Rotor (130) zu liegen, wobei jede nicht integrierte Zahnspitze (30) aus einem homogenen Materialstück besteht und jede nicht integrierte Zahnspitze (30) entweder integriert oder nicht integriert fest an mindestens einem nicht integrierten Zahnkörper (70) befestigt ist,
- wobei mindestens einer der Statorzähne (20, 100) ein integrierter Statorzahn (100) ist, wobei sowohl ein integrierter Zahnkörper (110) als auch eine integrierte zahnspitze (120) in das Statorjoch (40) integriert ist, und
einen Statorschlitz (90) zwischen jedem Paar aneinander angrenzender Zahnkörper (70, 110), wobei jeder Statorschlitz (90) dazu ausgelegt ist, mindestens eine Windung (50) aufzunehmen,
**dadurch gekennzeichnet, dass** jede nicht integrierte Zahnspitze (30) die in Längsrichtung verlaufenden Mittelebenen (150) von mindestens vier Statorschlitzen (90) kreuzt und dadurch mehr als 50 % der entsprechenden mindestens vier Statorschlitze (90), aus einer Richtung senkrecht zum Luftspalt (140) gesehen, abdeckt.

2. Stator (10) nach Anspruch 1, wobei jede nicht integrierte Zahnspitze (30) die in Längsrichtung verlaufenden Mittelebenen (150) von mindestens sechs Statorschlitzen (90) kreuzt.

3. Stator (10) nach einem der vorstehenden Ansprüche, wobei jede nicht integrierte Zahnspitze (30) mindestens 70 % der entsprechenden Statorschlitze (90), zum Beispiel mindestens 80 %, mindestens 90 % oder 100 % der entsprechenden Statorschlitze (90), aus einer Richtung senkrecht zum Luftspalt (140) gesehen, abdeckt.

4. Stator (10) nach einem der vorstehenden Ansprüche, wobei der mindestens eine integrierte Statorzahn (100) eine erste Höhe (160) aufweist, wobei ein nicht integrierter Zahnkörper (70) mindestens eines nicht integrierten Statorzahns (20) eine zweite Höhe (170) aufweist, wobei die zweite Höhe (170) mindestens 25 % der ersten Höhe (160), zum Beispiel mindestens 50 %, mindestens 60 %, mindestens 70 %, mindestens 80 % oder mindestens 90 % der ersten Höhe (160) beträgt.

5. Stator (10) nach einem der vorstehenden Ansprüche, wobei mindestens jeder sechste Statorzahn, zum Beispiel mindestens jeder vierte Statorzahn, ein integrierter Statorzahn (100) ist und jeder verbleibende Statorzahn ein nicht integrierter Statorzahn (20) ist.

6. Stator (10) nach einem der vorstehenden Ansprüche, wobei jede nicht integrierte Zahnspitze (30) den gesamten nicht integrierten Zahnkörper (70) bzw. die gesamten nicht integrierten Zahnkörper (70), aus einer Richtung senkrecht zum Luftspalt (140) gesehen, abdeckt.

7. Elektrische Maschine, einen Stator nach einem der vorstehenden Ansprüche umfassend.

8. Elektrische Maschine nach Anspruch 7, wobei die elektrische Maschine eine synchrone Maschine, zum Beispiel ein Synchronmotor oder ein Synchrongenerator, ist.

9. Elektrische Maschine nach Anspruch 7 oder 8, wobei die elektrische Maschine eine sich drehende Maschine ist.

## Revendications

1. Stator (10) pour une machine électrique, le stator (10) comprenant :
une pluralité de dents (20, 100) de stator, chaque dent (20, 100) de stator comprenant un corps (70, 110) de dent s'étendant depuis une culasse (40) de stator,
- au moins une des dents (20, 100) de stator étant une dent non intégrée (20) de stator pourvue au moins d'une tête non intégrée (30) de dent qui n'est pas intégrée de la culasse (40) de stator, chaque tête non intégrée (30) de dent étant configurée pour se tenir entre au moins un corps non intégré (70) de dent et un rotor (130), chaque tête non intégrée (30) de dent consistant en un morceau de matériau homogène, et chaque tête non intégrée (30) de dent étant solidarisée à au moins un corps non intégré (70) de dent d'une manière soit intégrée, soit non intégrée,
- au moins une des dents (20, 100) de stator étant une dent intégrée (100) de stator pourvue à la fois d'un corps intégré (110) de dent et d'une tête intégrée (120) de dent qui sont intégrés à la culasse (40) de stator, et
une encoche (90) de stator entre chaque paire de corps (70, 110) de dent voisins, chaque encoche (90) de stator étant configurée pour recevoir au moins un enroulement (50),
**caractérisé en ce que** chaque tête non intégrée (30) de dent traverse les plans longitudinaux centraux (150) d'au moins quatre encoches (90) de stator, et couvre ainsi plus de 50 % des au moins quatre encoches (90) de stator respectives en vue depuis une direction perpendiculaire à l'entrefer (140).

2. Stator (10) selon la revendication 1, dans lequel chaque tête non intégrée (30) de dent traverse les plans longitudinaux centraux (150) d'au moins six encoches (90) de stator.

3. Stator (10) selon l'une quelconque des revendications précédentes, dans lequel chaque tête non intégrée (30) de dent couvre au moins 70 % des encoches (90) de stator respectives, notamment au moins 80 %, au moins 90 % ou 100 % des encoches (90) de stator respectives en vue depuis une direction perpendiculaire à l'entrefer (140).

4. Stator (10) selon l'une quelconque des revendications précédentes, dans lequel l'au moins une dent intégrée (100) de stator présente une première hauteur (160), un corps non intégré (70) de dent d'au moins une dent non intégrée (20) de stator présente une deuxième hauteur (170), la deuxième hauteur (170) représentant au moins 25 % de la première hauteur (160), notamment au moins 50 %, au moins 60 %, au moins 70 %, au moins 80 % ou au moins 90 % de la première hauteur (160) .

5. Stator (10) selon l'une quelconque des revendications précédentes, dans lequel au moins une dent de stator sur six, notamment au moins une dent de stator sur quatre, est une dent intégrée (100) de stator, et chaque dent de stator restante est une dent non intégrée (20) de stator.

6. Stator (10) selon l'une quelconque des revendications précédentes, dans lequel chaque tête non intégrée (30) de dent couvre la totalité du corps non intégré (70) de dent respectif ou des corps non intégrés (70) de dent respectifs en vue depuis une direction perpendiculaire à l'entrefer (140).

7. Machine électrique comprenant un stator selon l'une quelconque des revendications précédentes.

8. Machine électrique selon la revendication 7, laquelle machine électrique est une machine synchrone, notamment un moteur synchrone ou une génératrice synchrone.

9. Machine électrique selon la revendication 7 ou 8, laquelle machine électrique est une machine tournante.
